# EUROPEAN PATENT APPLICATION

(11) **EP 4 503 394 A1**
(43) Date of publication of application: **05.02.2025**
(21) Application number: 23189033.6
(22) Date of filing: 01.08.2023
(51) Int. Cl.: H02K 3/38, H02K 3/50, H02K 15/00

(54) **STATOR AND ELECTRICAL MACHINE INCLUDING THE SAME**

(71) Applicant: Rolls-Royce Deutschland Ltd & Co KG, 15827 Blankenfelde-Mahlow (DE)
(72) Inventor: FJELLANGER, Viljar, 7041 Trondheim, c/o Rolls-Royce Electrical Norway, (NO); GRÖPPEL, Peter, 15827 Blankenfelde-Mahlow, c/o Rolls-Royce Deutschland Ltd & Co KG, (DE); MACHETTI, Diego, 15827 Blankenfelde-Mahlow, c/o Rolls-Royce Deutschland Ltd & Co KG, (DE); ROTEVATN, Njål, 7014 Trondheim, c/o Rolls-Royce Electrical Norway, (NO)

(57) **Abstract**

A stator (10) for an electrical machine is provided and an electrical machine (100) including the same. The stator (10) stator core (20) defining a central axis (C) and including a first side (21) and a second side (22) displaced from each other in an axial direction (A). A coil arrangement (30) includes a plurality of coils (32) supported by the stator core (20) and provided along a circumference (24) of the stator core (20). The connection ring (40) extends around the circumference (24) of the stator core (20) at one among the first side (21) or the second side (22), wherein the connection ring (40) comprises the following: A plurality of busbars (50; 50a, ..., 50g) each at least partially extending along the circumference (24), wherein at least some of the plurality of busbars (50a, ..., 50g) overlap with each other and each of the busbars (50; 50a, ..., 50g) is electrically connected to a corresponding coil (32). The connection ring (40) further comprises a busbar support member (70) having an insulating material which extends around the circumference (24). Further, at least one insulating film (60, 62) disposed between adjacently overlapping busbars (50; 50a, ..., 50g), wherein the busbar support member (70) surrounds the plurality of busbars (50; 50a, ..., 50g) and the at least one insulating film (60, 62) disposed between adjacently overlapping busbars (50; 50a, ..., 50g).

## Description

### Field of the Disclosure

The present disclosure relates to a stator including a connection ring for an electrical machine and a corresponding electrical machine including the stator. In another aspect, the invention refers to an aircraft including the electrical machine, in particular, as an electrical propulsion unit.

### Technological Background

Electrical machines can generate a rotary motion of a rotor from a supplied electrical power or can generate electrical power using a supplied rotary motion depending on the mode of operation. The electrical machines include a stator and a rotor, wherein the rotor can rotate relative to the stator while the stator is immobilized.

When the electrical machine is operated as a motor, the stator receives electrical power to generate a rotating magnetic field. In such case, the rotating magnetic field interacts with the rotor and causes the rotor to perform a rotating motion that is transferable to a mechanically coupled shaft to provide a rotation motion to a consumer based on the input electrical power. When the electrical machine is operated as a generator, a rotating motion of the rotor causes a voltage and/or a current which can be provided to an electric power consumer based on the input kinetic (rotation) energy.

The stator mechanically supports coils which produce the rotating magnetic field or generate the electrical power depending on the mode of operation of the electrical machine.

The electrical machines can be used for propulsion in transportation, where vehicle mobility or aircrafts are the main examples. For aerospace applications, additional requirements must be fulfilled in terms of energy efficiency, weight and compact design.

In order to generate the required mechanical torque when being operated as a motor, a coil arrangement including insulated coils formed around the stator is excited with voltages. The electrical interconnections to the coils are provided by a system of busbars which is also referred to as connection ring or switching ring. When being operated at high voltages, not only the coil arrangement but also the connection ring needs to be properly insulated which are therefore part of the electrical insulation system of the electrical machine.

It is further noted that distances between connection point of the busbar terminals and the insulations in the connection ring are very short and excessive heating can damage insulation. Further, distance from termination point to coil is also short and excessive heating can cause damage to the coils.

Thus, the electrical insulation system of the electrical machine plays a key role. Due to the demanding environmental conditions in which the electrical machine is used, the connection ring and the coils must provide sufficient electrical insulation for high voltages and even at high altitudes since the reduction in air pressure further reduces the dielectric strength of the surrounding air, which increases the risk of a breakdown or a flashover.

In terms of coil architecture, the main design solution for stator windings is the coil Hairpin approach. Nevertheless, the use of Hairpin coils allows only one turn per winding and requires mechanical interconnections to ensure electrical continuity. This results in the need of more space than one coil or winding with having multiple turns.

As for the nature of the conductor, solid conductors are the typical choice for electrical machines. These solid conductors have, however, the disadvantage of decreasing their performance for higher frequencies. Reason is that eddy currents are induced in the solid conductors so that losses increase with rising frequency due to the smaller effective area available for current flow.

Furthermore, the coils from the windings require an interconnection with a busbar system, which is typically manufactured in a process involving several steps. Thus, the probability of a manufacturing failure which can lead to defects that increase the presence of partial discharges (PDs) within the insulation system is comparably high.

The present invention provides a stator and an electrical machine including the stator which solves at least some of the above-mentioned problems. In addition, further technical problems in the above context are solved which becomes apparent from the following description.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a stator for an electrical machine is provided. The stator includes a stator core defining a central axis and including a first side and a second side displaced from each other in an axial direction. The stator further includes a coil arrangement including a plurality of coils supported by the stator core and provided along a circumference of the stator core. The stator further includes a connection ring extending around the circumference of the stator core at one among the first side or the second side. The connection ring comprises a plurality of busbars each at least partially extending along the circumference, wherein at least some of the plurality of busbars overlap with each other and the busbars are electrically connected to a corresponding coil. The connection ring includes a busbar support member having an insulating material and which extends around the circumference. Further, the connection ring includes at least one insulating film disposed between adjacently overlapping busbars, wherein the busbar support member having the insulating material surrounds the plurality of busbars and the at least one insulating film disposed between adjacently overlapping busbars.

Yet another aspect of the present disclosure refers to an electrical machine including the stator and an aircraft including the electrical machine. The electrical machine can be used in both full electric and hybrid propulsion units.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a perspective view of a stator according to an embodiment of the invention,
- Fig. 2: illustrates a perspective view of a connection ring according to an embodiment of the invention,
- Fig. 3: illustrates an example cross section view of the connection ring according to Fig. 2, and
- Fig. 4: illustrates a connection of a busbar with a corresponding coil according to an embodiment of the invention.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a stator for an electrical machine is provided. The stator includes a stator core defining a central axis and including a back side and a front side displaced from each other in an axial direction. The stator further includes a coil arrangement including a plurality of coils, preferably each coil including a plurality of Litz wires, supported by the stator core and provided along a circumference of the stator core. The stator further includes a connection ring extending around the circumference of the stator core at one among the front side or the back side. The connection ring comprises a plurality of busbars each at least partially extending along the circumference, wherein at least some of the plurality of busbars overlap with each other in the connection ring. Each of the busbars are electrically connected to a corresponding coil. The connection ring includes a busbar support member made of an insulating material which extends around the circumference of the connection ring. Further, the connection ring includes at least one insulating layer disposed between adjacently overlapping busbars, wherein the busbar support member including the insulating material integrally surrounds the plurality of busbars and the at least one insulating film that is disposed between adjacently overlapping busbars.

The insulating film may be in other words an insulating layer or laminate. The insulating film is to be distinguished from the busbar support member. The insulating film may have a different insulating material compared to the busbar support member. Integrally provided may mean in other terms that the busbars and the insulating films therebetween are embedded, immersed or surrounded by the busbar support member. This still encompasses that parts of the busbars like the necessary terminals can be exposed from the busbar support member. The busbar support member may form the shape of the connection ring and may insulate the connection ring. A coil arrangement includes the plurality of coils having a winding. The first side may be a front side and the second side may be a back side. The stator may include a plurality of stator teeth. The stator teeth may include a magnetic material as of laminated steel. The term overlapping for the busbars may mean that at least a section of a busbar is disposed on top of an adjacent busbar. Busbars are adjacent when there are no other busbars disposed between two busbars. The connection between winding coil and busbar may be provided through exposed terminals that protrude from connection ring and the coil arrangement, respectively.

The above-described stator includes a connection ring with improved insulation protection against over-voltages. Thus, the stator can therefore be used for high voltage applications and/or high frequencies. This is since in addition to the insulating busbar support member, at least one insulating film is provided between adjacently overlapping busbars. Thus, the at least one insulating film protects adjacent busbars from a conductive breakthrough failure or flashover between the different busbars that overlap each other. Therefore, due to the presence of the least one insulating film, the insulation strength of the connection ring and thus of the stator is increased compared to a case where only a distance in the insulating busbar .support member is reserved. Therefore, the stator is more robust for high voltage and high frequency applications. In particular, each of the coils may include a plurality of Litz wires. Then, relatively high frequencies and voltages can be operated when using Litz wires compared to when a solid conductor is used. In such case insulation at the connection ring may become critical. Thus, the improved insulation protection according to the embodiments of the present disclosure make the connection ring more suited for being combined with the case where the coils are made up of Litz wires. Further, the plurality of busbars can be formed by additive manufacturing so that defects that increase the presence of partial discharges (PDs) within the insulation system.

According to an embodiment, the at least one insulating film includes a lateral surface insulating film which surrounds a lateral surface of each of the busbars. The lateral surface may include the surfaces of the base area, top area and the side areas while omitting front and back of the busbars. The insulation strength is further improved since between each adjacently overlapping busbars at least two insulation films are formed. Thus, an insulation failure in one among the lateral surface insulating films can be compensated for by the other one among the films between two busbars. There is also in addition an insulation effect with respect to side directions which may be important in cases of intended or undesired misalignment of busbars or in case of different widths of busbars. The lateral surface insulating film can already be provided in the production process of the busbars. Furthermore, the lateral insulation films cover the edges of the busbar at which high electrical fields are formed and thus protects a weak spot of the busbars in terms of insulation.

According to an embodiment, the lateral surface insulating film is a powder coating. When a powder coating is used, the critical edges of the busbar may have a sufficient thickness. In other words, using powder coating allows for maintaining a strong insulation strength at the critical edges. Thus, the powder coating allows for well-defined corners of the lateral surface insulating film which are not weakened at the critical corners for example compared to liquid coatings. Thus, the insulation properties can be enhanced by using powder coating in comparison to conventional coating.

According to an embodiment, the lateral surface insulating film is a varnish. The varnish may be easily produced and has good attachment properties to the lateral surfaces of the busbars. Therefore, varnishes have relatively good insulation properties at edges and are therefore robust for high voltage and high frequency application.

According to an embodiment, the at least insulating film includes a planar insulating film which planarly extends between adjacently overlapping busbars. Since the planar insulating film has a mere planar geometry, it can be more mechanically stable and more robust against fracture or gaps compared to a lateral surface insulating film. In addition, a planar insulating film improves insulation in the main stack direction.

According to an embodiment, the planar insulating films are disposed between two lateral surface insulating films of adjacently overlapping busbars. In this configuration, when the lateral surface coating has a breaking failure or another insulation defect like a gap impurity, the planar insulating film may prevent an unintended insulation defect between the corresponding busbars which increases insulation security and functional safety. Insulation in this configuration is increased by orders, since essentially a triple insulation layer is provided. Therefore, the planar insulating film together with the two lateral surface insulating films ensures improved protection against over-voltages.

According to an embodiment, the planar insulating film includes an overhang or in other words a portion extending from an edge of at least one of the corresponding adjacently overlapping busbars. This has an additional insulation effect in that the critical edges of the busbar are sufficiently overlapped by the planar insulating film. Therefore, even in a case where the lateral surface insulating film has a failure at the critical edges, the lateral surface insulating film may prevent an insulation breakthrough between adjacently overlapping busbars at edges or across edges.

According to an embodiment, the planar insulating film is a polyimide film. Polyimide films provide mechanical stability as well as high insulation strength. To further optimize these properties, a Kapton film may be used as a specific embodiment of a polyimide film to optimize mechanical strength and insulation efficiency.

According to an embodiment, each of the busbars include a rectangular cross section, wherein a base area (or top area) of the busbars faces in axial direction. Thus, the busbars of the connection ring overlap each other in axial direction. This configuration allows reduction of the axial length compared to when the base area is perpendicular to the axial direction. This axial direction difference scales here with the number of overlapping busbars. Therefore, the connection ring (and the stator) is relatively compact in axial direction due to this stacking orientation of the rectangular busbars.

According to an embodiment, the busbar support member is an impregnated resin or a potting resin. Thus, an efficient integrally insulating surrounding body can be provided that supports the busbars and the insulating films.

According to an embodiment, each of the coils include a plurality of Litz wires, wherein an end portion of the coils is hot-crimped to form a compacted end portion terminal, wherein the compacted end portion terminal is connected to a coil connection terminal of a corresponding busbar. The Litz wires provide high filling factor and reduce electrical losses in HF, high frequency, applications. However, direct connection of Litz wires with a coil connection terminal is challenging. According to common techniques, the many parallel insulated strands need to be individually cleaned for varnish and connected together which is a cumbersome method. In contrast, according to the present embodiment, the hot-crimping burns the Litz wire insulations and thus provides a homogenous terminal, e.g. a (copper) solid material. Thus, despite of using Litz wires in the coils, an electrical connection can be based on the homogenous, i.e. compacted, terminal instead of connecting the Litz wires to the coil connection terminal of the bus bar. Hot crimping uses a conductive metal sleeve to fuse the wires. Thus, an improved electrical connection is provided that can transmit high frequencies between the coils and busbars with relatively low losses. Therefore, a superior performance of the electrical machine when the stator is driven with high frequency voltages can be achieved. Further, axial length due to the combination of stranded wire and the connection ring is obtained.

According to an embodiment, a rectangular copper sleeve is fitted on the end portion of the coils during the hot-crimping. This provides an even more homogenous terminal since the rectangular copper sleeve has a well-defined shape. For example, for a rectangular copper sheet the final connection point may be rectangular. Thus, losses across the connection can be further reduced and together with using the Litz wires an efficient power transfer at high frequencies provided. Hot-crimping may also be referred to as resistance welding.

According to an embodiment, the compacted end portion terminal is connected to the coil connection terminal of a corresponding busbar by welding, silver brazing or hot crimping. Thus, based on that a compacted terminal is provided by the hot crimping despite of the use of Litz wires as described above, a conventional electrical connecting can be used to perform the final connection.

According to an embodiment, the plurality of busbars is formed by additive manufacturing. Compared conventionally formed copper busbar, e.g. formed by pressing a metal sheet, a more compact busbar can be provided. The additive manufacturing may comprise producing the busbar based on copper powder melted together by a laser process. In this manner, the thickness of the busbars can be controlled to be comparably thin. Further, that defects that increase the presence of partial discharges (PDs) within the insulation system can be reduced. The thickness reduction of the connection ring scales with the number of overlapping busbars. Therefore, a compact connection ring is provided compared to when a conventionally formed solid copper busbar is provided. Further, the use of the additive technology enables the production of the connection ring in less steps and the probability of manufacturing failure being lower compared to conventional methods.

According to combinations of the above embodiments, a connecting ring and stator are based on the combination of a stranded coil, insulated busbars that build a connection ring, and the connection technology between stranded wire and solid copper. This combination makes it possible to realize a particularly efficient, powerful, reliable and weight-reduced rotating machine. This includes efficient production as only few production steps are necessary.

Further, the combination of stranded wires and solid copper material for the current-carrying components for low losses in the stator area, where high skin and proximity losses occur as a function of frequency, but effective production in the circuitry area through use of solid copper conductors. Thus, low losses in the area of the connection of stranded wire and busbar, short axial length due to the combination of stranded wire and busbar system

According to another aspect of the disclosure, an electrical machine includes a stator according to embodiments of the present invention is provided. The same advantages as described above are achieved. Further advantages can be derived directly from the advantages of the stator.

In addition, an aircraft comprising the electric machine is provided. In particular for aircrafts the above advantages are important for improving weight as well as safety and reliability of operation.

### Specific Embodiments

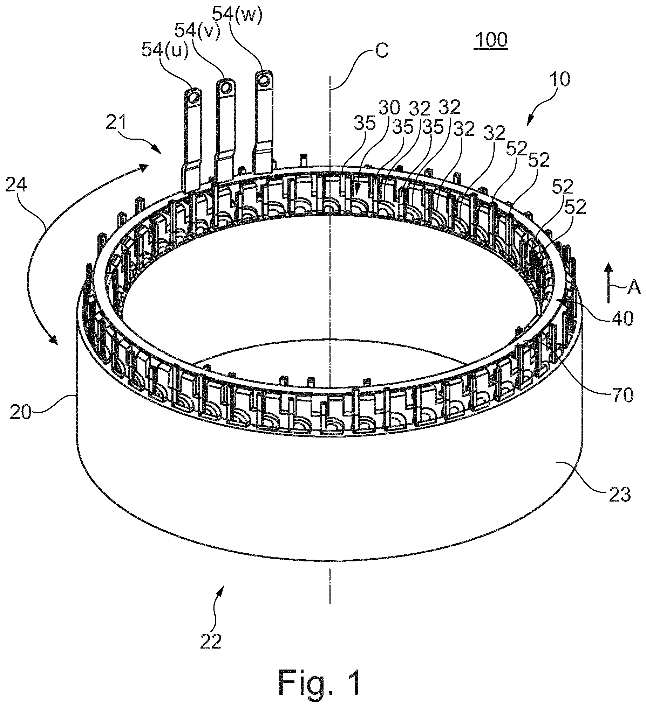

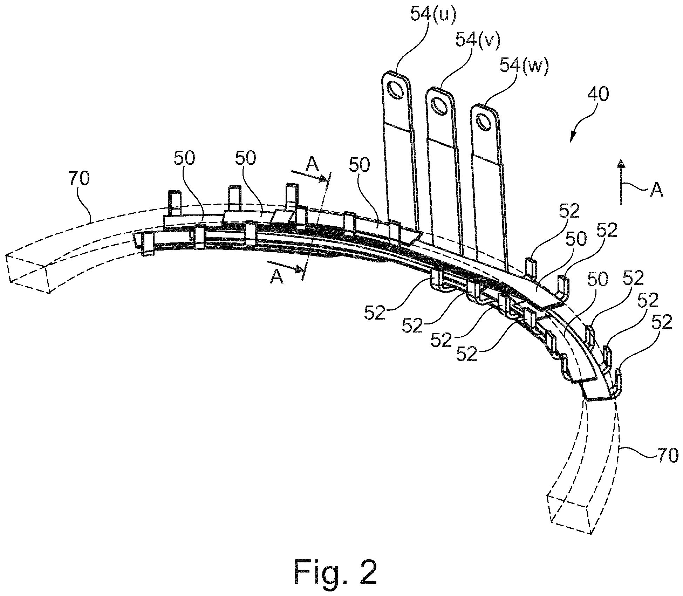

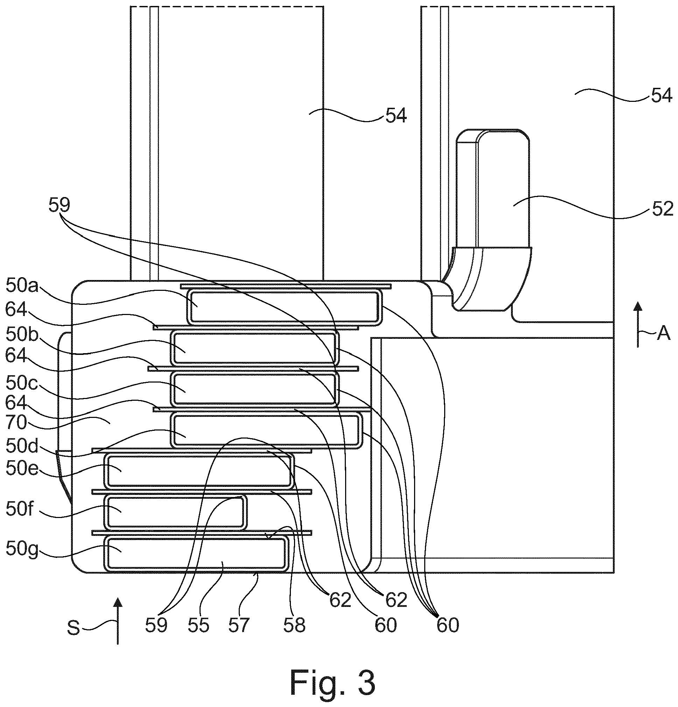

According to Fig. 1, a perspective view of a stator 10 for an electrical machine 100 according to an embodiment of the invention is shown. Fig. 2 illustrates in a perspective view a part of a connection ring 40 used for the stator 10 and Fig. 3 illustrates a cross section according to section A-A as exemplarily shown in Fig. 2. These embodiments will be described now together in the following.

Referring to Fig. 1, a stator 10 for an electrical machine 100 is provided. The stator 10 includes a stator core 20 defining a central axis C. The stator core 20 includes a first side 21 and a second side 22 which are axially displaced from each other. Thus, the stator 10 extends in an axial direction A as indicated in Figure 1. The stator core 20 may have the shape of a tube as illustrated. A stator wall 23 may enclose the stator 10 in a cylindrical shaped manner. When referring to the electrical machine 100, a rotor (here not shown) and a shaft coupled thereto may be provided surrounded by the stator 10 while reserving an air gap therebetween.

The stator 10 further includes a coil arrangement 30. The coil arrangement 30 comprises a plurality of coils 32. Each of the plurality of coils 32 are supported by the stator core 20. In particular, each of the coils 32 may include a plurality of Litz wires. Then, relatively higher frequencies and voltages can be provided when using Litz wires compared to when a solid conductor is used. In such case insulation may become a critical feature and improved insulation of the electrical components may be required as disclosed further below. Further, as illustrated in Fig. 1, the coils 32 are arranged in circular direction along a circumference 24 of the stator core 20. In particular, the coils 32 may be sequentially positioned in accordance with the circumference 24 of the stator core 20 as for example indicated in Fig. 1. Since invention is not restricted to a particular coil arrangement 30, the coil arrangement 30 of Fig. 1 merely acts as an example to illustrate the present disclosure.

The stator 20 further includes a connection ring 40. The connection ring 40 serves as an interconnect between the plurality of coils 32 and external connections, see the external connection terminals 54, to supply electrical power (motor) or to receive electrical power (generator) according to a predefined circuit. In the present case, a three-phase machine 100 is provided including three phases. For example, one or more lanes may be provided according to specific realizations. External connection terminals 54 are exposed from the connecting ring 40. Here, the connection terminals 54 protrude in axial direction A. These external connection terminals 54 may refer to three phases, here indicated as U, V and W. However, the invention is not restricted to a particular circuit embodiment and number of phases. Thus, for ease of description, no further distinguishment is made between the different phases unless explicitly stated.

The connection ring 40 extends around the circumference 24 of the stator core 20 at one among the first side 21 or the second side 22 and thereby forms a ring. For example, in the present case, the connection ring 40 extends around the circumference 24 at the first side 21 as illustrated in Fig. 1. The connection ring 40 will be described in the following in more detail with reference to Figs. 1, 2 and 3 for further illustration of the present invention.

Referring to Figs. 2 and 3, the connection ring 40 includes a plurality of busbars 50, 50a, ..., 50g. These busbars 50 are also present in Fig. 1 but cannot be seen since they are covered by the busbar support member 70 as explained further below.

Each of the plurality of busbars 50 at least partially extends along the circumference 24, as indicated exemplarily in Fig. 2. Therefore, the busbars 50 may be formed as an arc segment. That is, the busbars 50 may have a curved shape to extend at least partially along the circumference 24 of the connection ring 40. The respective lengths of the busbars 50 depend on the particular circuit to be realized and the present invention is not restricted to particular lengths.

As illustrated in Figs. 2 and 3, at least some, i.e. a subset, of the plurality of busbars 50; 50a, ..., 50g overlap with each other. This can be seen in Fig. 2 and also in the cross section according to A-A as illustrated in Fig. 3. For example, in the cross section as shown in Fig. 3, seven busbars 50a, ..., 50g are provided overlapping with respect to each other at a particular location along the circumference 24. However, the number of overlapping busbars 50 may vary along the circumference 24 and a different subset of the plurality of busbars 50 and a different number of busbars 50 may overlap each other at different positions along the circumference 24. Overlapping means here that different busbars 50a, ..., 50g at least have a section disposed on top of a section of an adjacent another busbar as illustrated in Figs. 2 and 3. The overlapping configuration of the busbars 50 allows for effective use of the circular arrangement of the connection ring 40.

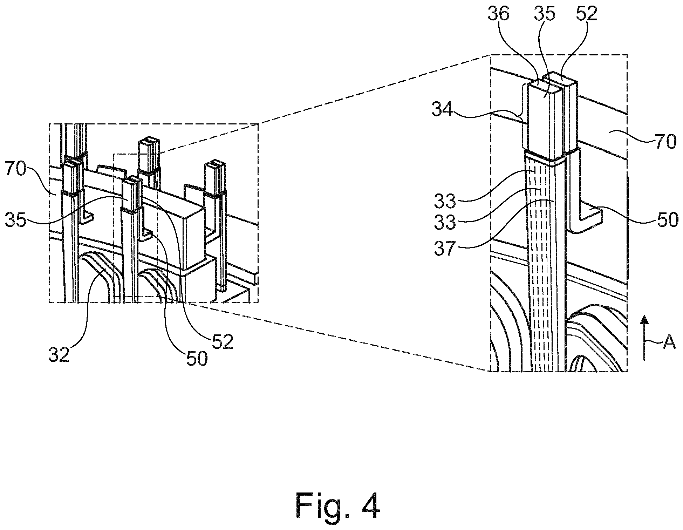

Referring back to Fig. 1, the busbars 50; 50a, ..., 50g of the connection ring 40 are each electrically connected to a corresponding coil 32. For this purpose each of the busbars 50; 50a, ..., 50g include a coil connection terminal 52. Examples of the coil connection terminals 52 of the busbars 50 are shown in Fig. 1 and are further illustrated in Fig. 4 as explained further below. The coils 32 further include end portion terminals 35 which are connected to corresponding coil connection terminals 52 as shown in Fig. 1 and is further illustrated in the description with respect to Fig. 4.

When the stator 10 and the electrical machine 100 is used with high voltages and high frequencies, for example in a configuration where the coils 32 include a plurality of Litz wires, a robust insulation of the connection ring 40 has to be provided so that electrical insulation failure can be prevented. In particular, an undesired electrical connection between overlapping busbars 50; 50a, ..., 50g or break through or flash over is to be prevented. Therefore, according to the present disclosure, an improved insulation is provided as will be described further below. Referring now to Figs. 1 and 3, a busbar support member 70 is provided having an insulating material. The busbar support member 70 extends around the circumference 24 of the stator 20 and provides structural integrity to the connection ring 40. The busbar support member 70 is illustrated also in Fig. 2 indicated in dashed form. The busbar support member 70 provides general insulation for the plurality of busbars 50 and also provides the ring shape and structural strength of the entire connection ring 40.

Referring to Fig. 3, in addition to the busbar support member 70, at least one insulating film 60, 62 is disposed between adjacently overlapping busbars 50; 50a, ..., 50g. That is, in other words, between each pair of overlapping busbars 50; 50a, ..., 50g, at least one insulating film 60, 62 is provided in addition to the busbar support member 70 as mentioned above.

In addition, as shown in Fig. 3, the busbar support member 70 having the insulation property integrally surrounds the plurality of busbars 50; 50a, ..., 50g and the at least one insulating film 60, 62 disposed between adjacently overlapping busbars 50; 50a, ..., 50g. Thus, the insulating busbar support member 70 surrounds the busbars 50; 50a, ..., 50g and the at least one insulating film 60, 62 disposed between the busbars 50; 50a, ..., 50g.

Since at least one insulating film 60, 62 is provided between adjacently overlapping busbars 50; 50a, ..., 50g in addition to the insulating busbar support member 70, when operating with high voltages and high frequencies, the least one insulating film 60, 62 protects adjacent busbars from an insulation failure that may occur between the different busbars 50; 50a, ..., 50g that overlap each other as illustrated in Fig. 3. Therefore, due to the presence of the least one insulating film 60, 62, the insulation strength of the connection ring 40 is increased. Thus, the improved insulation protection according to the embodiments of the present disclosure make the connection ring more suited for being combined with coils including a plurality of Litz wires, i.e., which are operated at higher frequencies and/or voltages.

In addition, when referring to Fig. 3, the at least one insulating film 60, 62 includes a lateral surface insulating film 60. The lateral surface insulating film 60 surrounds a lateral surface 56 of each of the busbars 50; 50a, ..., 50g. The lateral surface insulating film 60 is formed as a coating to surround the corresponding busbar 50; 50a, ..., 50g. Since the entire lateral surface 56 is covered by the lateral surface insulating film 60, between each adjacently overlapping busbars 50; 50a, ..., 50g, two insulation films are formed. Thus, insulation failure in one of the lateral surface insulating films 60 may be compensated for by the other among the lateral surface insulating films 60 between adjacently overlapping busbars 50; 50a, ..., 50g. Further, since the entire lateral surface 56 is covered by the lateral surface insulating film 60, there is an insulation effect also with respect to side directions D that are declined with respect to a stacking direction S of the overlapping busbars 50; 50a, ..., 50g. This may for example be important in configurations where the busbars 50 are not perfectly aligned with each other or have a different width as for example shown in Fig. 3. Further, the lateral surface insulating film 60 insulates the busbars not only in stacking direction S from each other, but also in various declined directions D. Thus, insulation strength is substantially increased.

In addition to the above, the edges 59 of the busbars 50 are critical since electrical fields are maximal at these edges 59 and the regions around these edges 59. Therefore, according to an embodiment of the invention, the lateral surface insulating film 60 may be a powder coating. When a powder coating is used, a thickness of the lateral surface insulating film 60 also at the edges 59 can be maintained during the production and in the resulting product compared to conventional coatings. Therefore, the powder coating allows to provide strong insulation at the edges 59 of the busbars 50 where insulation is critical. In another embodiments, to provide faster processing, the lateral surface insulating film 60 may be a varnish.

Further referring to Fig. 3, the at least one insulating film 60, 62 may include a planar insulating film 62. The planar insulating film 62 planarly extends between adjacently overlapping busbars 50; 50a, ..., 50g as illustrated in Fig. 3. Thus, the planar insulating film 62 extends perpendicular to a stacking direction S of the busbars 50; 50a, ..., 50g. Since the stacking direction S is the relevant direction in which the busbars 50; 50a, ..., 50g of different phases need to be insulated from each other, the planar insulating film 62 provides an efficient insulation that can prevent an electrical break through failure in stacking direction S. In particular, since the planar insulating film 62 has a mere plane geometry, it may be more mechanically stable and robust against fracture or gaps compared to the lateral surface insulation film 60. In addition, specific robust material for such planar insulating film 62 can be selected. For example, a mechanically stable polyamide material can be used, in particular, Kapton may be used. Thus, the insulation between the busbars 50 can be further enhanced when using planar insulating film 62.

When referring to Fig. 3 of the present embodiment, the planar insulating film 62 and the lateral surface insulating film 60 can be synergistically combined. That is, when referring to Fig. 3, the planar insulating film 62 is disposed between two lateral surface insulating films 60 of adjacently overlapping busbars 50; 50a, ..., 50g. Thus, in this embodiment, a triple insulation layer is formed between two adjacently overlapping busbars 50; 50a, ..., 50g as shown in detail in Fig. 3.

Further, fractures or insulation failure may occur in the lateral surface insulating film 60, for example, at the curved portions of the lateral surface insulating film 60 curved around the lateral surface and edges 59 of the corresponding busbar 50. Therefore, in case of that the lateral surface insulating film 60 has a failure like for example a fracture or gap, the planar insulating film 62 provides an additional safety insulation layer for improving insulation safety. In particular, the planar insulating film 62 may be mechanically more robust and thus less likely toward failure thereby increases insulation safety in combination with the lateral surface insulating film 60.

To even further improve the insulation safety, the planar insulating film 62 may have an overhang 64 or in other words extended portion. The overhang 64 refers to the part of the planar insulating film 62 that extends from an edge 59 of at least one of adjacently overlapping busbars 50; 50a, ..., 50g. This has an additional insulation effect in that the critical edges 59 of the busbar 50; 50a, ... , 50g can be overlapped by the planar insulating film 62 as indicated in various stacking layers of the overlapped busbars 50, 50a, ..., 50g as indicated in Fig. 3. Therefore, even in a case where the lateral surface insulating film 60 has a failure at the critical edges 59, the lateral surface insulating film 60 may prevent an insulation breakthrough between adjacently overlapping busbars 50; 50a, ..., 50g at the edges 59. Thus, the insulation properties of the above connection ring 40 is enhanced.

An additional insulation of the stacked busbars 50, 50a, ..., 50g is achieved by the busbar support member 70. In a preferred embodiment, a resin is used to integrally enclose the busbars 50, 50a, ..., 50g and the at least one insulation film 60, 62 therein. Resin allows to provide stable support and electrically insulates the connection ring 40 as a whole with respect to additional components of the stator 10. In an embodiment, the busbar support member 70 is an impregnated resin. Thus, by impregnating, the busbars 50, 50a, ..., 50g and the insulation films 60, 62 are integrally provided and supported. This is easy to process and provides stable support. As an alternative, also a potting resin may be provided to reach the integral structure as shown for example in Fig. 3. The busbar support member 70 is also shown in Fig. 1, where it covers the plurality of busbars 50, 50a, ..., 50g (cannot be seen in Fig. 1).

According to an embodiment, each of the busbars 50; 50a, ..., 50g include a rectangular cross section 55. The busbars 50; 50a, ..., 50g further include a base area 57 (or top area 58) and the busbars are stacked so that base area 57 faces parallel to the axial direction A of the stator 10 so that the busbars 50; 50a, ..., 50g overlap each other in axial direction A. This stacking orientation is shown in Figs. 2 and 3. Therefore, due to this configuration, an axial length of the stator 10 is reduced compared to a case where a base area 57 (or top area 58) does not face parallel to the axial direction A. Thus, axial length is further reduced.

Again referring to Figs. 2 and 3, the plurality of busbars 50; 50a, ..., 50g may be formed by additive manufacturing. The additive manufacturing may comprise producing the busbar busbars 50; 50a, ..., 50g based on copper powder melted together, for example by a laser process. In this manner the thickness of the busbars can be controlled to be comparably thin compared to, for example, when the busbars 50; 50a, ..., 50g are press processed from a metal or copper plate and/or curled from a sheet material. The thickness reduction of the connection ring 40 scales with the number of overlapping busbars 50; 50a, ..., 50g. Therefore, a compact connection ring 40 can be provided compared to when a conventionally formed copper busbar is provided. Further, the use of the additive technology enables the production of the connection ring in less steps, so that the probability of manufacturing failure being lower compared when obtained from press processed from a metal or copper plate. Thus, together with the insulation properties as explained, failure probability may be enhanced.

Therefore, by the above features, the insulation properties of the connection ring 40 can be improved in order increase robustness when using high voltage e.g. when operating as a motor, and when using high frequency for high power performance while still providing sufficient compactness. Thus, the stator 10 according to the various embodiments is useful in application, in particular, aircrafts, where the performance requires optimization.

The insulation properties as described above are particularly important when the stator 10, i.e. electrical machine 100, is operated at high frequencies, e.g. HF. In combination therewith, electrical power has to be transferred between the coil arrangement 30 and the external power components (here not shown) through the plurality of busbars 50, 50a, ..., 50g of the connection ring 40. Thus, not only the insulation in the busbar system is important, but in combination thereto, also the power losses across the conductors and at their transitions should be minimized for allowing high performance.

Fig. 4 shows a preferred embodiment of interfacing a corresponding busbar 50 with a corresponding coil 32. Here, only the connection parts are shown from Fig. 1 which are the subject of improvement as explained further below.

To reduce the power losses caused by eddy currents in a conductor when using HF, each of the coils 32 include a plurality of Litz wires 33 instead of a solid conductor. The Litz wires 33 are here only schematically shown due to the presence of a coil insulation 37 surrounding the Litz wires 33. The Litz wires 33 provide high filling factor and reduce electrical losses in HF, high frequency, applications in the coils 32. However, the connection to the corresponding busbars 50 is challenging.

According to the present embodiment, an end portion 34 of the coil 32 is hot-crimped to form a compacted end portion terminal 35. Thus, due to the hot-crimping, the individual strands of the Litz wires 33 are melted together while the insulation of the individual Litz wires 33 is burned/melted so that a compacted end portion terminal 35 for the coil 32 is provided. This is despite of that the coil 32 comprises only the Litz wires 33. Thus, instead of connecting the Litz wires to a coil connection terminal 52 of a corresponding busbar 50, a compacted end portion terminal 35 is connected to a coil connection terminal 52 as illustrated in Fig. 4. In consequence, an improved electrical connection between a coil 32 having the Litz wires 33 and a coil connection terminal 52 of a corresponding busbar 50 is provided that can transmit high frequencies across the connection with relatively low losses.

In addition, an improved connection and contact to the corresponding coil connection terminal 52 can be provided, when a rectangular copper sleeve 36 is used in the hot-crimping process. Thus, the rectangular copper sleeve 36 provides a contact shape to improve the contact and contact area with the coil connection terminal 52. In Fig. 4, the rectangular copper sleeve 36 is shown to provide a contact surface commensurate to the coil connection terminal 52.

As shown in Fig. 4, the compacted end portion terminal 35 is then connected to the coil connection terminal 52 of a corresponding busbar 50; 50a, ..., 50g. The connection may be performed by welding, for example laser welding or induction welding, silver brazing or hot-crimping, but the invention is not restricted thereto. Thus, conventional connecting can be applied despite of having Litz wires 33 in the coil 32. In the present example, the coil connection terminal 52 is an exposed portion of the busbar 50. Further, the coil connection terminal 52 protrudes in axial direction A from the connection ring 40 having a bent portion as shown in Fig. 4. In a corresponding way, the compacted end portion terminal 35 of the coil 32 protrudes in axial direction A so to correspond to, i.e. mate with, the coil connection terminal 52 so that the contact areas face with each other.

Further, the stator 10 as described above in various embodiments may be part of an electrical machine 100 which includes the stator 10 according to any of the above embodiments. In addition, a rotor, here not shown, may be coaxially surrounded by the stator 10 and can be rotated around the central axis C in operation. A shaft may be coupled to the stator 10 to transmit rotation energy. An air gap, here not visible, may formed between the rotor and the stator 10 in the electrical machine 100.

In summary, a stator 10 is provided that is compact and having improved insulation properties as well operating compliance with high-frequency. In addition, the combination of the various embodiments makes it possible to realize a safely insulated, efficient, powerful, reliable and weight-reduced rotating machine.

### Reference signs

- 10: stator

- 20: stator core
- 21: first side
- 22: second side
- 23: stator wall
- 24: circumference

- 30: coil arrangement
- 32: coil
- 33: Litz wire (conductor)
- 34: end portion
- 35: compacted end portion terminal
- 36: copper sleeve
- 37: coil insulation

- 40: connection ring

- 50: busbar
- 52: coil connection terminal
- 54: external connection terminal U/V/W
- 55: cross section
- 56: lateral surface
- 57: base area
- 58: top area
- 59: edge

- 60: lateral surface insulating film
- 62: planar insulating film
- 64: overhang (extending portion)
- 70: busbar support member / holder

- 100: electrical machine

- C: central axis
- A: axial direction
- S: stacking direction
- D: side direction

## Claims

1. A stator (10) for an electrical machine, comprising:
a stator core (20) defining a central axis (C) and including a first side (21) and a second side (22) displaced from each other in an axial direction (A);
a coil arrangement (30) including a plurality of coils (32) supported by the stator core (20) and provided along a circumference (24) of the stator core (20),
a connection ring (40) extending around the circumference (24) of the stator core (20) at one among the first side (21) or the second side (22), wherein the connection ring (40) comprises:
a plurality of busbars (50; 50a, ..., 50g) each at least partially extending along the circumference (24), wherein at least some of the plurality of busbars (50a, ..., 50g) overlap with each other and each of the busbars (50; 50a, ..., 50g) is electrically connected to a corresponding coil (32),
a busbar support member (70) having an insulating material which extends around the circumference (24), and
at least one insulating film (60, 62) disposed between adjacently overlapping busbars (50; 50a, ..., 50g), wherein the busbar support member (70) surrounds the plurality of busbars (50; 50a, ..., 50g) and the at least one insulating film (60, 62) disposed between adjacently overlapping busbars (50; 50a, ..., 50g).

2. The stator (10) according to claim 1, wherein the at least insulating film (60, 62) includes a lateral surface insulating film (60) which surrounds a lateral surface (52) of each of the busbars (50; 50a, ..., 50g).

3. The stator (10) according to claim 2, wherein lateral surface insulating film (60) is a powder coating.

4. The stator (10) according to claim 2, wherein lateral surface insulating film (60) is a varnish.

5. The stator (10) according to any one of the preceding claims 1 to 4, wherein the at least insulating film (60, 62) includes a planar insulating film (62) which planarly extends between two adjacently overlapping busbars (50; 50a, ..., 50g).

6. The stator (10) according to claim 5, when dependent on claims 2 to 4, wherein the planar insulating films (62) are disposed between two lateral surface insulating films (60) of adjacently overlapping busbars (50; 50a, ..., 50g).

7. The stator (10) according to any one of the preceding claims 5 to 6, wherein the planar insulating film (62) include an overhang (64) which extends from an edge (59) of at least one of the corresponding adjacently overlapping busbars (50; 50a, ..., 50g).

8. The stator (10) according to any one of the preceding claims 5 to 6, wherein the planar insulating film (62) is a polyimide film.

9. The stator (10) according to any one of the preceding claims 1 to 8, wherein each of the busbars (50; 50a, ..., 50g) includes a rectangular cross section (55), wherein a base area (57) of the busbars (50; 50a, ..., 50g) faces in axial direction (A) so that the plurality of busbars (50; 50a, ..., 50g) overlap each other in axial direction (A).

10. The stator (10) according to any one of the preceding claims 1 to 9, wherein the busbar support member (70) is an impregnated resin or a potting resin.

11. The stator (10) according to any one of the preceding claims 1 to 9, wherein
each of the coils (32) include a plurality of Litz wires (33); and
an end portion (34) of the coils (32) is hot-crimped to form a compacted end portion terminal (35), wherein the compacted end portion terminal (35) is connected to a coil connection terminal (52) of a corresponding busbar (50; 50a, ..., 50g).

12. The stator (10) according to claim 11, wherein a rectangular copper sleeve (36) is fitted on the end portion (34) of the coils (32) during hot-crimping.

13. The stator (10) according to any one of the preceding claims 1 to 12, wherein the plurality of busbars (50; 50a, ..., 50g) is formed by additive manufacturing.

14. An electrical machine (100) including a stator (10) according to any of the preceding claims 1 to 13.

15. An aircraft including an electrical machine (100) according to claim 14.
